# EUROPÄISCHE PATENTANMELDUNG

(11) **EP 4 451 072 A1**
(43) Veröffentlichungstag der Anmeldung: **23.10.2024**
(21) Anmeldenummer: 23168259.2
(22) Anmeldetag: 17.04.2023
(51) Int. Cl.: G05B 19/4099, G05B 19/418

(54) **VERFAHREN UND DATENVERARBEITUNGSSYSTEM ZUM BETREIBEN UND SIMULIEREN EINER FERTIGUNGSANLAGE UND FERTIGUNGSANLAGE**

(71) Anmelder: Siemens Aktiengesellschaft, 80333 München (DE)
(72) Erfinder: Dranov, Alexander, 82178 Puchheim (DE); Fink, Rafael, 81829 München (DE); Hüttel, Franziska, 91054 Erlangen (DE); Klein, Wolfram, 85579 Neubiberg (DE); Kubo, Florian, 97727 Fuchsstadt (DE); Peschke, Jörn, 90489 Nürnberg (DE); Scharm, Oliver, 90419 Nürnberg (DE); Schief, Andreas, 80802 München (DE); Schnittger, Jens, 91475 Lonnerstadt (DE); Wannagat, Andreas, 41469 Neuss (DE); Wehrstedt, Jan Christoph, 81829 München (DE); Wieczorek, Michael, 91056 Erlangen (DE)
(74) Vertreter: Siemens Patent Attorneys

(57) **Zusammenfassung**

Zum Betreiben einer Fertigungsanlage (1) aufweisend eine Vielzahl von ersten Fertigungsstationen (3), die jeweils zur automatischen Durchführung einer Fertigungsaufgabe gemäß einer ersten Aufgabenklasse eingerichtet sind, wird eine Vielzahl von Aufträgen vorgegeben, wobei jeder Auftrag eine Fertigung wenigstens eines zu fertigenden Produkts spezifiziert und wobei die Fertigung jedes zu fertigenden Produkts die Durchführung einer Fertigungsaufgabe gemäß der ersten Aufgabenklasse beinhaltet. Es wird eine Vielzahl unterschiedlicher Verteilungsoptionen (12) bestimmt, wobei durch jede Verteilungsoption jedes zu fertigende Produkt eines Teils der Vielzahl von Aufträgen
einer ersten Fertigungsstation (3) zugewiesen wird. Es wird abhängig von Fertigungskapazitäten der ersten Fertigungsstationen (3) eine umzusetzende Verteilungsoption ausgewählt ein entsprechender Fertigungsplan (13) für einen vorgegebenen Fertigungszeitraum erzeugt. Die Fertigungsanlage (1) wird basierend auf dem Fertigungsplan (13) betrieben.

## Beschreibung

Die vorliegende Erfindung betrifft ein Verfahren zum Betreiben einer Fertigungsanlage, ein Verfahren zum Simulieren eines Betriebs einer Fertigungsanlage, ein Datenverarbeitungssystem zum Betreiben einer Fertigungsanlage und/oder zum Simulieren eines Betriebs der Fertigungsanlage, sowie eine Fertigungsanlage mit einem solchen Datenverarbeitungssystem.

In Fertigungsanlagen kann es einen Mix von Arbeitsstationen mit unterschiedlichem Automatisierungsgrad geben. Neben vollautomatisierten Prozessen können teilautomatisierte und/oder manuell auszuführende Arbeitsschritte erforderlich sein. Ein typisches Beispiel hierfür ist die additive Fertigung, beispielsweise die additive Fertigung mit metallischen Werkstoffen. Andere Beispiele sind etwa Chipfabriken in der Halbleiterindustrie, Gießereien oder auch Fertigungsanlagen zur Metallbearbeitung.

Fertigungsanlagen zur additiven Fertigung weisen Fertigungsstationen zur additiven Fertigung, auch als 3D-Drucker bezeichnet, auf, die nach entsprechender Vorbereitung längere Zeit automatisch arbeiten, ohne dass im Regelfall ein Eingriff eines Bedieners erforderlich ist. Zudem weisen solche Fertigungsanlagen gegebenenfalls auch Sägen zum Trennen der gedruckten Werkstücke und/oder Öfen zur Wärmebehandlung auf, die bestückt und gestartet werden und dann selbstständig ein vorgegebenes Programm abfahren, bis sie wieder entladen und für den nächsten Job vorbereitet werden. Darüber hinaus gibt es aber auch manuelle Arbeitsplätze, bei denen Bediener die Werkstücke manuell bearbeiten.

Einzelne Fertigungsstationen wie 3D-Drucker sind durch unterschiedliche Kenngrößen und Parameter charakterisiert, beispielsweise einen Fertigungsraum, im Fall von 3D-Druckern auch als Bauraum bezeichnet. Der Fertigungsraum entspricht dabei einem räumlichen Volumen zur Aufnahme von Werkstücken beziehungsweise einem Volumen, in dem Werkstücke gefertigt, insbesondere gedruckt, werden können. Je größer der Fertigungsraum, desto mehr und/oder umso größere Werkstücke können mit der Fertigungsstation gefertigt werden. Der Fertigungsraum entspricht also einer räumlichen Kapazität der Fertigungsstation. Dasselbe gilt analog für andere Fertigungsstationen, wie Öfen oder Sägen.

Die räumliche Kapazität allein sagt noch nichts über den Durchsatz der Fertigungsstation aus, also darüber wie viele Werkstücke in einem bestimmten Zeitraum gefertigt beziehungsweise bearbeitet werden können. Dies quantifiziert eine Fertigungskapazität der Fertigungsstation. Die Fertigungskapazität hängt neben der räumlichen Kapazität insbesondere von einer Fertigungsgeschwindigkeit, beispielsweise Druckgeschwindigkeit im Falle von 3D-Druckern, oder einer Fertigungsdauer für einen bestimmte Fertigungsaufgabe ab. Die Fertigungskapazität kann zum Beispiel als Produkt der räumlichen Kapazität und der Fertigungsgeschwindigkeit oder dem Quotienten der räumlichen Kapazität und der Fertigungsdauer entsprechen oder dergleichen. Die Fertigungskapazität kann auch als Fertigungsdurchsatz der Fertigungsstation bezeichnet werden.

Des Weiteren können die Fertigungsstationen, je nach deren konkreter Ausgestaltung beziehungswese deren Art und Funktion, gegebenenfalls durch weitere Kenngrößen und Parameter gekennzeichnet sein, beispielsweise einsetzbare Materialien im Falle eines 3D-Druckers, Temperaturbereiche im Falle eines Ofens, Energieverbrauch, Verschleißrate und so weiter.

Beispielsweise sind die Bediener für mehrere Arbeitsplätze und/oder Funktionen eingeplant. Manche ihrer Tätigkeiten sind unterbrechbar, andere nicht. Die Ausführungszeiten für manuelle Aufgaben können stark schwanken, sowohl abhängig von Charakteristika der bearbeiteten Werkstücke, als auch abhängig vom Erfahrungsgrad des Bedieners. Dazu können schwer vorhersehbare Unregelmäßigkeiten oder Abweichungen im Arbeitsablauf kommen, etwa durch nicht ausreichende Qualität eines gedruckten Werkstücks oder Fehler in der Nachbearbeitung.

Es ist eine Aufgabe der vorliegenden Erfindung die Effizienz einer Fertigungsanlage, insbesondere einer Fertigungsanlage zur additiven Fertigung, zu steigern.

Diese Aufgabe wird durch den jeweiligen Gegenstand der unabhängigen Ansprüche gelöst. Vorteilhafte Ausführungsformen und bevorzugte Weiterbildungen sind Gegenstand der abhängigen Ansprüche.

Die Erfindung basiert auf der Idee, einen Fertigungsplan zur Abarbeitung der Vielzahl von Aufträgen innerhalb eines Fertigungszeitraums in einem zweistufigen Vorgehen automatisiert zu erzeugen. Zunächst wird dazu abhängig von den räumlichen Kapazitäten erster Fertigungsstationen der Fertigungsanlage eine Vielzahl unterschiedlicher Verteilungsoptionen bestimmt, wobei durch jede Verteilungsoption jedes zu fertigende Produkt einer ersten Fertigungsstation zugewiesen wird. Sodann wird abhängig von den Fertigungskapazitäten der ersten Fertigungsstationen eine umzusetzende Verteilungsoption ausgewählt und der Fertigungsplan dementsprechend erzeugt. Basierend auf dem Fertigungsplan kann Fertigungsanlage betrieben oder deren Betrieb simuliert werden.

Gemäß einem Aspekt der Erfindung wird ein Verfahren zum Betreiben einer Fertigungsanlage, insbesondere einer Fertigungsanlage zur additiven Fertigung, angegeben. Die Fertigungsanlage weist eine Vielzahl von ersten Fertigungsstationen auf, die jeweils zur automatischen Durchführung einer Fertigungsaufgabe gemäß einer ersten Aufgabenklasse eingerichtet sind. Jede erste Fertigungsstation der Vielzahl von ersten Fertigungsstationen ist zumindest durch eine jeweilige räumliche Kapazität und eine jeweilige Fertigungskapazität charakterisiert. Es wird eine Vielzahl von Aufträgen vorgegeben, wobei jeder Auftrag der Vielzahl von Aufträgen eine Fertigung wenigstens eines zu fertigenden Produkts spezifiziert und wobei die Fertigung jedes zu fertigenden Produkts jedes der Vielzahl von Aufträgen die Durchführung einer Fertigungsaufgabe gemäß der ersten Aufgabenklasse, beispielsweise genau einer Fertigungsaufgabe gemäß der ersten Aufgabenklasse, beinhaltet.

Mittels wenigstens einer Recheneinheit, insbesondere mittels eines Optionsgeneratormoduls der wenigstens einen Recheneinheit, wird abhängig von den jeweiligen räumlichen Kapazitäten der Vielzahl von ersten Fertigungsstationen automatisch eine Vielzahl unterschiedlicher Verteilungsoptionen bestimmt, wobei durch jede Verteilungsoption der Vielzahl unterschiedlicher Verteilungsoptionen jedes zu fertigende Produkt eines Teils der Vielzahl von Aufträgen einer, beispielsweise genau einer, ersten Fertigungsstation der Vielzahl von ersten Fertigungsstationen zugewiesen wird.

Mittels der wenigstens einen Recheneinheit wird abhängig von den jeweiligen Fertigungskapazitäten der Vielzahl von ersten Fertigungsstationen eine umzusetzende Verteilungsoption der Vielzahl unterschiedlicher Verteilungsoptionen automatisch ausgewählt und, insbesondere mittels eines Zeitplanermoduls der wenigstens einer Recheneinheit, entsprechend der umzusetzenden Verteilungsoption wird automatisch ein Fertigungsplan für einen vorgegebenen Fertigungszeitraum erzeugt.

Die Fertigungsanlage wird gemäß dem Fertigungsplan betrieben. Dazu wird insbesondere derjenige Teil der Vielzahl von Aufträgen basierend auf dem Fertigungsplan abgearbeitet, welcher der umzusetzenden Verteilungsoption entspricht.

Für eine gegebene Verteilungsoption der Vielzahl unterschiedlicher Verteilungsoptionen werden die Produkte eines bestimmten Teils der Aufträge auf die ersten Fertigungsstationen aufgeteilt. Dieser Teil ist für unterschiedliche Verteilungsoptionen unterschiedlich. In manchen Fällen kann der Teil auch allen Aufträgen der Vielzahl von Aufträgen entsprechen. Im Allgemeinen sind von dem Teil, der der umzusetzenden Verteilungsoption entspricht, jedoch nicht alle zu fertigenden Produkte aller Aufträge der Vielzahl von Aufträgen umfasst, sodass auch gemäß dem Fertigungsplan nicht alle Aufträge der Vielzahl von Aufträgen abgearbeitet werden.

Vielmehr verhält es sich so, dass erst wenn der Fertigungsplan erstellt wurde auch feststeht, welche Aufträge vollständig oder teilweise abgearbeitet werden. Die jeweils verbleibenden Aufträge können dann beispielsweise bei einer Erneuten Durchführung des Verfahrens und der entsprechenden Erstellung eines weiteren Fertigungsplans für einen weiteren Fertigungszeitraum berücksichtigt werden. Eine Priorität der verbleibenden Aufträge kann dann beispielsweise auch ansteigen.

Insbesondere können eine oder mehrere verschiedene Fertigungsaufgaben, die zur Fertigung der Produkte erforderlich sind, der ersten Aufgabenklasse zugeordnet sein. Ebenso können eine oder mehrere verschiedene Fertigungsaufgaben einer zweiten Aufgabenklasse zugeordnet sein. Insbesondere ist eine Fertigungsaufgabe, die der ersten Aufgabenklasse zugeordnet ist, der zweiten Aufgabenklasse nicht zugeordnet und umgekehrt. Mit anderen Worten sind die zur Fertigung der Produkte erforderlichen Fertigungsaufgaben aufgeteilt in die erste Aufgabenklasse und die zweite Aufgabenklasse. Diese Aufteilung ist insbesondere vordefiniert.

Die Fertigungsaufgaben der ersten Aufgabenklasse und der zweiten Aufgabenklasse können aufgrund unterschiedlicher Vorgaben entsprechend aufgeteilt sein, beispielsweise abhängig von einer Zeitdauer, die zur Durchführung der jeweiligen Fertigungsaufgabe erforderlich ist und/oder abhängig von einem Automatisierungsgrad mit dem die jeweilige Fertigungsaufgabe durchgeführt werden kann, und/oder von einer Unterbrechbarkeit der jeweiligen Fertigungsaufgabe und so weiter.

Zum Beispiel können die Fertigungsaufgaben der ersten Aufgabenklasse langlaufende und gut planbare Vorgänge beinhalten, die insbesondere auch kritisch für die Gesamtperformance der Fertigungsanlage sein können. Sie eignen sich aufgrund dieser Eigenschaften beispielsweise für eine präzise Planung durch leistungsfähige Optimierungsalgorithmen. Dies kann beispielsweise für Fertigungsaufgaben der zweiten Aufgabenklasse nicht der Fall sein, etwa aufgrund schwankender Bearbeitungsdauern und/oder weiterer Imponderabilien. Die Fertigungsaufgaben der zweiten Aufgabenklasse können beispielsweise unterbrechbar sein.

Im Anwendungsfall der additiven Fertigung können die ersten Fertigungsstationen der Vielzahl von ersten Fertigungsstationen zur Durchführung der Fertigungsaufgaben gemäß der ersten Aufgabenklasse beispielsweise Fertigungsstationen zur additiven Fertigung von Werkstücken beinhalten, die im Folgenden auch als 3D-Drucker bezeichnet werden. Dementsprechend können zu den Fertigungsaufgaben gemäß der ersten Aufgabenklasse diejenigen zur Abarbeitung der Vielzahl von Aufträgen erforderlichen Fertigungsaufgaben gehören, die mittels eines 3D-Druckers durchgeführt werden können, also insbesondere der 3D-Druck eines Werkstücks.

Die ersten Fertigungsstationen der Vielzahl von ersten Fertigungsstationen zur Durchführung der Fertigungsaufgaben gemäß der ersten Aufgabenklasse können beispielsweise im Fall der additiven Fertigung nur 3D-Drucker beinhalten oder auch einen oder mehrere Öfen und/oder eine oder mehrere Sägen und/oder einen oder mehrere Entpulverungsmaschinen beinhalten.

Dabei können verschiedene erste Fertigungsstationen der Vielzahl von ersten Fertigungsstationen zur Durchführung derselben Fertigungsaufgabe ausgestaltet sein. Dabei können diese verschiedenen ersten Fertigungsstationen nominell identisch sein oder sich in einer oder mehreren Eigenschaften unterscheiden, beispielsweise in der räumlichen Kapazität, im Falle eines 3D-Druckers also dem zur Verfügung stehenden Bauraum, und/oder der Fertigungsgeschwindigkeit, insbesondere Druckgeschwindigkeit, und/oder der Produktionskapazität, also insbesondere dem Bauraum und der Druckgeschwindigkeit in Kombination, und so weiter.

Ebenso können verschiedene erste Fertigungsstationen der Vielzahl von ersten Fertigungsstationen zur Durchführung unterschiedlicher Fertigungsaufgaben ausgestaltet sein. Diese unterschiedlichen Fertigungsaufgaben können sich beispielsweise durch die Verwendung unterschiedlicher Materialen, insbesondere beim 3D-Druck, unterscheiden und so weiter. Im Falle der additiven Fertigung kann, wie oben erwähnt, die Vielzahl von ersten Fertigungsstationen neben 3D-Druckern auch Öfen, Sägen und/oder Entpulverungsmaschinen beinhalten, sodass sich die grundlegenden Aufgaben der einzelnen ersten Fertigungsstationen gegebenenfalls auch voneinander unterscheiden können.

Dass die ersten Fertigungsstationen der Vielzahl von ersten Fertigungsstationen jeweils zur automatischen Durchführung der Fertigungsaufgabe gemäß der ersten Aufgabenklasse eingerichtet sind, kann insbesondere derart verstanden werden, dass die Durchführung der Fertigungsaufgabe automatisch und ohne Eingriff eines Bedieners durchgeführt werden kann. Dies schließt jedoch manuelle Schritte zur Vorbereitung der ersten Fertigungsstation, Nachbereitung der ersten Fertigungsstation, zum Starten der Durchführung der Fertigungsaufgabe und/oder zur Fehlerbehebung und so weiter nicht aus.

Die Fertigungsaufgaben gemäß der zweiten Aufgabenklasse sind beispielsweise nicht mittels der ersten Fertigungsstationen der Vielzahl von ersten Fertigungsstationen durchführbar. Dabei kann es sich beispielsweise um manuelle Tätigkeiten, teilweise manuelle Tätigkeiten oder automatische Vorgänge zur Nachbearbeitung oder Nachbehandlung handeln, insbesondere der mittels der 3D-Drucker gedruckten Werkstücke. Diese Fertigungsaufgaben gemäß der zweiten Aufgabenklasse können im Anwendungsfall der additiven Fertigung beispielsweise das Entfernen von Stützstrukturen, Schritte zum manuellen Nachbohren gedruckter Löcher, Schleifbehandlungen und so weiter beinhalten.

Wie oben erwähnt können die Fertigungsaufgaben gemäß der zweiten Aufgabenklasse je nach Aufteilung der Fertigungsaufgaben auf die erste und die zweite Aufgabenklasse, auch das Trennen der gedruckten Werkstücke voneinander beziehungsweise von verbindenden Bodenteilen oder dergleichen, beispielsweise durch Sägeprozesse, und/oder Wärmebehandlungen in einem Ofen beinhalten.

Jede erste Fertigungsstation der Vielzahl von ersten Fertigungsstationen zeichnet sich durch vorgegebene Eigenschaften aus, welche die jeweilige räumliche Kapazität, also beispielsweise Druckerbauraum, und die jeweilige Fertigungskapazität beinhalten und beispielsweise einsetzbare Materialien, Energieverbrauch und so weiter beinhalten können. Des Weiteren ist auch für die Vielzahl von Aufträgen und somit beispielsweise die Art und Anzahl der jeweils zu fertigenden Produkte, die dafür erforderlichen Materialien, Termine zur Fertigstellung und so weiter vorgegeben. Dabei können insbesondere alle Produkte eines gegebenen Auftrags identisch sein oder Produkte eines gegebenen Auftrags können voneinander verschieden sein. Produkte unterschiedlicher Aufträge können ebenfalls identisch sein oder voneinander verschieden.

Aus den Eigenschaften der ersten Fertigungsstationen der Vielzahl von ersten Fertigungsstationen und der Vielzahl von Aufträgen lässt sich somit eine Grundmenge aller theoretisch realisierbaren Verteilungsoptionen bestimmen. Jede realisierbare Verteilungsoption entspricht dabei einer Zuweisung aller Produkte aller Aufträge der Vielzahl von Aufträgen zu jeweils genau einer ersten Fertigungsstation der Vielzahl von ersten Fertigungsstationen, mittels der das jeweilige Produkt gefertigt beziehungsweise teilweise gefertigt werden kann. Alle realisierbaren Verteilungsoptionen der Grundmenge unterscheiden sich dabei voneinander. Dabei können alle Produkte eines gegebenen Auftrags ein und derselben ersten Fertigungsstation zugewiesen werden oder der Auftrag kann aufgeteilt werden, sodass die Produkte des jeweiligen Auftrags auf unterschiedlichen ersten Fertigungsstationen der Vielzahl von ersten Fertigungsstationen gefertigt beziehungsweise teilweise gefertigt werden können.

Die Vielzahl unterschiedlicher Verteilungsoptionen, die mittels der wenigstens einen Recheneinheit automatisch bestimmt wird, ist eine Teilmenge der genannten Grundmenge aller realisierbaren Verteilungsoptionen, insbesondere eine echte Teilmenge, also eine nicht zur Grundmenge identische Teilmenge. Eine Verteilungsoption kann beispielsweise Zuordnungsvariante verstanden, die definiert, wie ein bestimmter Teil der zu fertigenden Produkte, gegebenenfalls können dies auch alle Produkte aller Aufträge sein, auf die verfügbaren ersten Fertigungsstationen gemäß der räumlichen Kapazitäten aufgeteilt werden. Dies kann auf unterschiedliche Weise erfolgen. Beispielsweise können die zu fertigenden Produkte individuell direkt den ersten Fertigungsstationen zugeordnet sein. Alternativ können die zu fertigenden Produkte Produktionseinheiten, auch als Lose, Chargen oder Batches bezeichnet, die jeweils mehrere Produkte beinhalten, zugeordnet sein. Jede Produktionseinheit kann dann entsprechend einer ersten Fertigungsstation zugeordnet sein.

Gemäß einer gegebenen Verteilungsoption kann auch eine Mehrfachbelegung einer gegebenen ersten Fertigungsstation vorgesehen sein. Mit anderen Worten, die gegebene erste Fertigungsstation kann einem Satz von zu fertigenden Produkten zugeordnet sein. Dabei ist dann beispielsweise vorgesehen, dass der erste Satz von zu fertigenden Produkten gemeinsam gefertigt wird. Bei einem 3D-Drucker wäre dies beispielsweise ein erster Druckjob. Ferner kann dieselbe erste Fertigungsstation einem zweiten Satz von zu fertigenden Produkten zugeordnet sein. Dabei ist dann beispielsweise vorgesehen, dass der zweite Satz von zu fertigenden Produkten gemeinsam gefertigt wird, allerdings getrennt von dem ersten Satz von Produkten, also zuvor oder danach. Bei einem 3D-Drucker wäre dies beispielsweise ein zweiter Druckjob. Dies kann auch für mehr als zwei Sätze von zu fertigenden Produkten erweitert werden.

Die Grundmenge realisierbarer Verteilungsoptionen, die auch als Grundmenge aller theoretisch möglichen Verteilungsoptionen bezeichnet werden kann, ist in realistischen Anwendungsfällen gegebenenfalls sehr groß, sodass eine optimale Erstellung eines Fertigungsplans direkt basierend auf der Grundmenge extrem rechenaufwändig und daher gegebenenfalls zeitaufwändig wäre. Erfindungsgemäß wird daher durch die Bestimmung der Vielzahl unterschiedlicher Verteilungsoptionen abhängig von den jeweiligen räumlichen Kapazitäten der Vielzahl von ersten Fertigungsstationen eine Vorauswahl getroffen oder beispielweise eine Voroptimierung durchgeführt, um die darauffolgende Auswahl der umzusetzenden Verteilungsoption und die Erstellung des Fertigungsplans möglichst effizient durchführen zu können.

Die Bestimmung der Vielzahl unterschiedlicher Verteilungsoptionen abhängig von den jeweiligen räumlichen Kapazitäten der Vielzahl von ersten Fertigungsstationen kann gemäß verschiedenen Auswahlkriterien oder Voroptimierungskriterien erfolgen. Diese können beispielsweise beinhalten, dass eine gesamte ungenutzte räumliche Kapazität der ersten Fertigungsstationen möglichst gering ist, also insbesondere kleiner oder gleich einem entsprechend vorgegebenen Grenzwert ist. Somit wird erreicht, dass möglichst wenig verfügbarer Bauraum ungenutzt bleibt, also gewissermaßen verschwendet wird.

Die Auswahlkriterien oder Voroptimierungskriterien können auch derart gestaltet sein, dass eine Gesamtanzahl von Produkten, die durch die entsprechende Verteilungsoption auf die ersten Fertigungsstationen verteilt werden, möglichst groß ist. Statt der tatsächlichen Gesamtanzahl kann auch eine effektive Gesamtmenge von Produkten herangezogen werden, wobei Produkte unterschiedlicher Art, Größe, Volumen, Gewicht und/oder Produkte mit unterschiedlichem wirtschaftlichem Wert unterschiedlich gewichtet werden und somit unterschiedlich stark zur Gesamtmenge beitragen.

Die Bestimmung der Vielzahl unterschiedlicher Verteilungsoptionen abhängig von den jeweiligen räumlichen Kapazitäten der Vielzahl von ersten Fertigungsstationen erfolgt insbesondere unabhängig von den Fertigungskapazitäten der ersten Fertigungsstationen. Dies bedeutet, dass sie Fertigungskapazitäten nicht explizit verwendet werden, wobei, wie oben erwähnt, die Fertigungskapazitäten gegebenenfalls von den räumlichen Kapazitäten abhängen. Die Bestimmung der Vielzahl unterschiedlicher Verteilungsoptionen kann also beispielsweise als zeitunabhängig bezeichnet werden in dem Sinne, dass sie keine zeitliche Planung oder Reihenfolge der Fertigung der Produkte, insbesondere der Produktionseinheiten, beinhaltet.

Eine solche zeitliche Planung oder Planung der Reihenfolge kann auch als Scheduling bezeichnet werden. Diese erfolgt in dem erfindungsgemäßen Verfahren abhängig von den Fertigungskapazitäten der ersten Fertigungsstationen erst im zweiten Schritt, in dem die umzusetzende Verteilungsoption ausgewählt und der Fertigungsplan erzeugt wird. Dieser zweite Schritt kann insbesondere als Optimierung durchgeführt werden. Durch die erfindungsgemäße Zweiteilung kann die Komplexität bei der Auswahl der umzusetzenden Verteilungsoption und der Erstellung des Fertigungsplans reduziert werden, was letztlich die Qualität der Optimierung verbessert und/oder den zeitlichen Aufwand und die erforderlichen Rechenressourcen zur Erstellung des Fertigungsplans reduziert.

Durch das beschriebene erfindungsgemäße Verfahren wird eine optimale Nutzung der zur Verfügung stehenden Ressourcen der Fertigungsanlage ermöglicht.

Unter einer Recheneinheit kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Gemäß zumindest einer Ausführungsform des Verfahrens zum Betreiben der Fertigungsanlage wird mittels der wenigstens einen Recheneinheit, insbesondere mittels eines Bedieneranweisungsmoduls der wenigstens einen Recheneinheit, abhängig von dem Fertigungsplan eine priorisierte Liste von Tätigkeiten für wenigstens einen Bediener der Fertigungsanlage erzeugt.

Die priorisierte Liste kann beispielsweise mittels wenigstens einem elektronischen Gerät, beispielsweise wenigstens einem mobilen elektronischen Gerät der Bediener, angezeigt werden. Dabei können allen Bedienern beziehungsweise auf allen der elektronischen Geräte jeweils alle Einträge der priorisierten Liste angezeigt werden oder es können bestimmte Einträge der priorisierten Liste bestimmten Bedienern oder Gruppen von Bedienern zugewiesen werden und entsprechend nur auf einem oder mehreren bestimmten der elektronischen Geräte angezeigt werden.

Zur Abarbeitung der Vielzahl von Aufträgen kann die priorisierte Liste dementsprechend durch die Bediener abgearbeitet werden, was insbesondere das Starten der Fertigungsaufgaben gemäß der ersten Aufgabenklasse, erforderliche Tätigkeiten nach deren Fertigstellung, und/oder das Starten oder manuelle Durchführen der Fertigungsaufgaben gemäß der zweiten Aufgabenklasse beinhaltet.

Gemäß zumindest einer Ausführungsform wird eine Eingabe des wenigstens einen Bedieners betreffend eine Statusänderung einer der Tätigkeiten der priorisierten Liste von Tätigkeiten erfasst und die priorisierte Liste von Tätigkeiten wird abhängig von der Eingabe aktualisiert, insbesondere mittels der wenigstens einen Recheneinheit.

Dadurch kann ein Bediener durch die Eingabe der wenigstens einen Recheneinheit mitteilen, dass sich der Status der entsprechenden Tätigkeit geändert hat, beispielsweise weil der Bediener die entsprechende Tätigkeit übernommen hat, gestartet hat, abgebrochen hat, erfolgreich durchgeführt hat, dass ein Fehler aufgetreten ist oder dergleichen. Die wenigstens eine Recheneinheit, insbesondere das Bedieneranweisungsmodul, kann dann entsprechend der jeweiligen Statusänderung die priorisierte Liste anpassen und gegebenenfalls mittels des wenigstens einen elektronischen Geräts erneut oder aktualisiert anzeigen.

Die aktualisierte priorisierte Liste kann sich von der vorherigen priorisierten Liste abhängig von der Statusänderung und gegebenenfalls abhängig von der Tätigkeit, welche die Statusänderung betrifft, in unterschiedlicher Weise unterscheiden. Wenn die Statusänderung beispielsweise einer Übernahme der Tätigkeit oder der erfolgreichen Fertigstellung durch einen Bediener entspricht, so kann die Tätigkeit in der aktualisierten priorisierten Liste beispielsweise gelöscht oder entsprechend gekennzeichnet werden, sodass ein anderer Bediener die Tätigkeit nicht mehr übernehmen kann. Bei Abbruch oder im Falle eines Fehlers kann die aktualisierte priorisierte Liste auch eine aktualisierte Reihenfolge, also aktualisierte Priorisierung, der Tätigkeiten festlegen, vorgesehene Zeitpunkte oder Zeiträume zur Durchführung der Tätigkeiten verändern, und so weiter. Die Änderungen sind dabei insbesondere im Einklang mit dem Fertigungsplan, sodass der Fertigungsplan nach wie vor erfüllbar ist.

Anderenfalls, also im Falle schwerwiegender Abweichungen, kann es erforderlich sein, die Abarbeitung abzubrechen, einen neuen Fertigungsplan zu erstellen, beispielsweise durch erneute Durchführung des erfindungsgemäßen Verfahrens, und die Abarbeitung der verbleibenden Aufträge dann fortzusetzen.

Die Eingabe wird beispielsweise durch eine Eingabeschnittstelle eines des wenigstens einen elektronischen Geräts oder eines weiteren elektronischen Geräts erfasst, beispielsweise durch eine Tastatur, ein berührungsempfindliches Display, eine Spracheingabeschnittstelle oder dergleichen.

Gemäß zumindest einer Ausführungsform wird mittels der wenigstens einen Recheneinheit ein Maschinenstatus von einer der ersten Fertigungsstationen erhalten und die priorisierte Liste von Tätigkeiten abhängig von dem Maschinenstatus aktualisiert.

Dadurch kann bei Abweichungen des Maschinenstatus von einem Normalbetrieb, etwa in einem Fehlerfall oder falls Wartungstätigkeiten oder sonstige Eingriffe durch Bediener erforderlich sind, die wenigstens eine Recheneinheit darauf reagieren, indem die priorisierte Liste angepasst wird. Die wenigstens eine Recheneinheit, insbesondere das Bedieneranweisungsmodul, kann dann entsprechend des jeweiligen Maschinenstatus die priorisierte Liste anpassen und gegebenenfalls mittels des wenigstens einen elektronischen Geräts erneut oder aktualisiert anzeigen.

Die aktualisierte priorisierte Liste kann sich von der vorherigen priorisierten Liste abhängig von dem Maschinenstatus und gegebenenfalls abhängig von der Art der entsprechenden ersten Fertigungsstation, welche der Maschinenstatus betrifft, in unterschiedlicher Weise unterscheiden.

Im Falle schwerwiegender Fehler oder dergleichen, kann es erforderlich sein, die Abarbeitung abzubrechen, einen neuen Fertigungsplan zu erstellen, beispielsweise durch erneute Durchführung des erfindungsgemäßen Verfahrens, und die Abarbeitung der verbleibenden Aufträge dann fortzusetzen.

Gemäß zumindest einer Ausführungsform, wobei die Vielzahl unterschiedlicher Verteilungsoptionen einer echten Teilmenge der Grundmenge aller mittels der Vielzahl von Fertigungsanlagen realisierbarer Verteilungsoptionen ist, wird zum Bestimmen der Vielzahl unterschiedlicher Verteilungsoptionen eine Vorauswahl aus der Grundmenge unter Anwendung wenigstens eines vorgegebenen Auswahlkriteriums durchgeführt.

Gemäß zumindest einer Ausführungsform, wobei die Vielzahl unterschiedlicher Verteilungsoptionen einer echten Teilmenge der Grundmenge aller mittels der Vielzahl von Fertigungsanlagen realisierbarer Verteilungsoptionen ist, wird zum Bestimmen der Vielzahl unterschiedlicher Verteilungsoptionen ein Optimierungsverfahren durchgeführt, insbesondere ein numerisches Optimierungsverfahren, wobei die Vielzahl realisierbarer Verteilungsoptionen der Grundmenge als Variablen der Optimierung, also als Variablen bei dem Optimierungsverfahren, verwendet werden.

Für die Optimierung wird insbesondere eine vorgegebene Zielfunktion verwendet, welche eines oder mehrere vorgegebenen Optimierungskriterien darstellt. Zudem können entsprechend vorgegebene Nebenbedingungen verwendet werden.

Die Optimierungskriterien können beispielsweise eine Auslastung, also eine möglichst hohe Auslastung, der einzelnen ersten Fertigungsstationen betreffen, einen Gesamtdurchsatz gefertigter Produkte, bevorzugte oder vorgeschriebene Zeiträume innerhalb des Fertigungszeitraums, in denen bestimmte Fertigungsaufgaben durchgeführt werden, eine jeweilige Priorität der der Aufträge, die Vermeidung von Umrüstungen der ersten Fertigungsstationen während des Fertigungszeitraums, insbesondere die Vermeidung entsprechender Materialwechsel, die möglichst gemeinsame Bearbeitung aller Produkte eines Auftrags in einer einzigen der ersten Fertigungsstationen, einen Energieverbrauch der Fertigungsanlage, einen Materialverbrauch der Fertigungsanlage, und so weiter. Dies gilt analog in entsprechenden Ausführungsformen für das wenigstens eine Auswahlkriterium.

Dabei wird die Optimierung oder die Vorauswahl derart durchgeführt, dass nicht lediglich eine einzige Verteilungsoption der Grundmenge als Resultat der Optimierung oder der Vorauswahl erhalten wird, sondern die Vielzahl unterschiedlicher Verteilungsoptionen. Dies kann auf unterschiedliche Weise erreicht werden. Beispielsweise kann die Zielfunktion derart gewählt werden, dass deren Optimierung, also Minimierung oder Maximierung, mehrere Lösungen, also mehrere Verteilungsoptionen, hat. Alternativ oder zusätzlich kann auch ein Abbruchkriterium für die Optimierung derart gewählt werden, dass mehrere Lösungen möglich sind. Die Zielfunktion kann dann beispielsweise mehrfach optimiert werden, beispielsweise mit verschiedenen Startbedingungen, um mehrere optimale Lösungen zu erhalten.

Gemäß zumindest einer Ausführungsform wird das Optimierungsverfahren als gemischt ganzzahlige lineare Optimierung durchgeführt, also als Verfahren zur gemischt ganzzahligen linearen Optimierung.

Gemäß zumindest einer Ausführungsform wird zum Auswählen der umzusetzenden Verteilungsoption ein weiteres Optimierungsverfahren durchgeführt, wobei die Vielzahl unterschiedlicher Verteilungsoptionen als Variablen der weiteren Optimierung, also als Variablen bei dem weiteren Optimierungsverfahren, verwendet wird.

Für die weitere Optimierung wird insbesondere eine vorgegebene weitere Zielfunktion verwendet, welche eines oder mehrere vorgegebenen weiteren Optimierungskriterien darstellt. Zudem können entsprechend vorgegebene weitere Nebenbedingungen verwendet werden.

Die jeweiligen Fertigungskapazitäten der ersten Fertigungsanlagen können bei der weiteren Optimierung in der Form der weiteren Nebenbedingungen berücksichtigt werden und/oder der weiteren Optimierungskriterien.

Die weiteren Optimierungskriterien können beispielsweise eine Auslastung, also eine möglichst hohe, der einzelnen ersten Fertigungsstationen der Vielzahl von ersten Fertigungsstationen, der Bediener und/oder zweiter Fertigungsstationen zur Durchführung der Fertigungsaufgaben gemäß der zweiten Aufgabenklasse, betreffen, einen Gesamtdurchsatz gefertigter Produkte, bevorzugte oder vorgeschriebene Zeiträume innerhalb des Fertigungszeitraums, in denen bestimmte Fertigungsaufgaben durchgeführt werden, eine jeweilige Priorität der der Aufträge, die Vermeidung von Umrüstungen der ersten Fertigungsstationen während des Fertigungszeitraums, insbesondere die Vermeidung entsprechender Materialwechsel, die möglichst gemeinsame Bearbeitung aller Produkte eines Auftrags in einer einzigen der ersten Fertigungsstationen, einen Energieverbrauch der Fertigungsanlage, einen Materialverbrauch der Fertigungsanlage, und so weiter.

Das weitere Optimierungsverfahren kann in einem oder in mehreren Schritten durchgeführt werden. In einem ersten Schritt kann aus der Vielzahl unterschiedlicher Verteilungsoptionen eine Teilmenge potenziell umzusetzender Verteilungsoptionen bestimmt werden. Diese Teilmenge potenziell umzusetzender Verteilungsoptionen kann Schritt für Schritt verkleinert werden, bis nach einem finalen Schritt nur noch die eine tatsächlich umzusetzende Verteilungsoption verbleibt, gemäß der der Fertigungsplan erstellt wird.

Gemäß zumindest einer Ausführungsform wird das weitere Optimierungsverfahren als gemischt ganzzahlige lineare Optimierung durchgeführt, also als Verfahren zur gemischt ganzzahligen linearen Optimierung.

Gemäß zumindest einer Ausführungsform beinhaltet die Fertigung jedes zu fertigenden Produkts die Durchführung einer Fertigungsaufgabe gemäß der zweiten Aufgabenklasse.

Gemäß zumindest einer Ausführungsform wird die umzusetzende Verteilungsoption abhängig von der Kapazität zur Durchführung der Fertigungsaufgaben gemäß der zweiten Aufgabenklasse bestimmt.

Die Kapazität zur Durchführung der Fertigungsaufgaben gemäß der zweiten Aufgabenklasse kann bei der weiteren Optimierung in der Form der weiteren Nebenbedingungen berücksichtigt werden und/oder der weiteren Optimierungskriterien.

Die Kapazität zur Durchführung der Fertigungsaufgaben gemäß der zweiten Aufgabenklasse kann beispielsweise eine Gesamtkapazität mit mehreren Teilkapazitäten sein. Eine Teilkapazität kann beispielsweise die Kapazität der Fertigungsanlage zur Durchführung von Fertigungsaufgaben der zweiten Aufgabenklasse sein, für die die jeweils zur Verfügung stehenden Ressourcen und die zur Abarbeitung der Aufträge erforderlichen Ressourcen konkret festgelegt sind. Dies kann, je nach Aufteilung der Fertigungsaufgaben, im Anwendungsfall der additiven Fertigung zum Beispiel für die oben genannten Schritte zur Wärmebehandlung in Öfen oder auch zum Trennen der gedruckten Werkstücke zutreffen. Eine weitere Teilkapazität kann beispielsweise die Kapazität der zur Abarbeitung der Aufträge eingeplanten Bediener sein, beispielsweise zum Vor- und/oder Nachbereiten der ersten Fertigungsstationen oder der zweiten Fertigungsstationen der Fertigungsanlage und/oder für die oben genannten manuellen Tätigkeiten. Diese weitere Teilkapazität kann beispielweise in Form von insgesamt verfügbarer Arbeitszeit der Bediener, durch die Bediener erreichbare Stückzahlen und so weiter abgeschätzt werden.

Gemäß zumindest einer Ausführungsform wird die wenigstens eine Fertigungsaufgabe gemäß der zweiten Aufgabenklasse, insbesondere für jedes zu fertigende Produkt aller Aufträge der Vielzahl von Aufträgen oder wenigstens für jedes zu fertigende Produkt eines Teils der Vielzahl von Aufträgen, eine Nachbehandlung oder Nachbearbeitung mittels einer zweiten Fertigungsstation der Fertigungsanlage und/oder eine manuelle Nachbehandlung oder Nachbearbeitung.

Bei der zweiten Fertigungsstation kann es sich, insbesondere im Anwendungsfall einer Fertigungsanlage zur additiven Fertigung und je nach Aufteilung der Fertigungsaufgaben auf die erste und die zweite Aufgabenklasse, beispielsweise um eine Sägestation zum Trennen mehrerer gedruckter Werkstücke voneinander oder um eine Ofenstation mit einem Ofen zur Wärmebehandlung gedruckter Werkstücke handeln.

Bei der Nachbehandlung oder Nachbearbeitung kann es sich auch um das Entfernen von Stützstrukturen handeln, die für die additive Fertigung erforderlich oder vorteilhaft sind, im fertigen Produkt aber nicht vorgesehen sind. Dies kann manuell und/oder automatisch und/oder teilweise automatisch an der zweiten Fertigungsstation erfolgen.

Die Nachbehandlung oder Nachbearbeitung kann beispielsweise auch ein Schleifen der gedruckten Werkstücke und/oder ein Nachbohren von Löchern der gedruckten Werkstücke und so weiter beinhalten. Dies kann manuell und/oder automatisch und/oder teilweise automatisch an der zweiten Fertigungsstation erfolgen.

Gemäß zumindest einer Ausführungsform ist wenigstens ein Teil der Vielzahl von ersten Fertigungsstationen jeweils dazu eingerichtet, die entsprechende Fertigungsaufgabe gemäß der ersten Aufgabenklasse gleichzeitig für eine Vielzahl von Produkten durchzuführen.

Die Produkte können dabei aus verschiedenen Aufträgen stammen. Dies kann insbesondere im Anwendungsfall der additiven Fertigung auftreten, wo 3D-Drucker mehrere gleiche oder gleichartige Produkte parallel drucken können.

In solchen Ausführungsformen wirkt sich die Erfindung aufgrund der Komplexität der Planungsmöglichkeiten besonders vorteilhaft aus.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Gemäß einem weiteren Aspekt der Erfindung wird ein Verfahren zum Simulieren eines Betriebs einer Fertigungsanlage, insbesondere eines Betriebs der Fertigungsanlage entsprechend einem erfindungsgemäßen Verfahren zum Betreiben einer Fertigungsanlage, angegeben, welches im Folgenden auch als Simulationsverfahren bezeichnet wird. Die Fertigungsanlage weist eine Vielzahl von ersten Fertigungsstationen auf, die jeweils zur automatischen Durchführung einer Fertigungsaufgabe gemäß einer vordefinierten ersten Aufgabenklasse eingerichtet sind. Jede erste Fertigungsstation ist zumindest durch eine jeweilige räumliche Kapazität und eine jeweilige Fertigungskapazität charakterisiert. Es wird eine Vielzahl von Aufträgen vorgegeben, wobei jeder Auftrag eine Fertigung wenigstens eines zu fertigenden Produkts spezifiziert und wobei die Fertigung jedes zu fertigenden Produkts die Durchführung einer Fertigungsaufgabe gemäß der ersten Aufgabenklasse beinhaltet.

Mittels wenigstens einer Recheneinheit wird abhängig von den jeweiligen räumlichen Kapazitäten der Vielzahl von ersten Fertigungsstationen automatisch eine Vielzahl unterschiedlicher Verteilungsoptionen bestimmt, wobei durch jede Verteilungsoption jedes zu fertigende Produkt genau einer ersten Fertigungsstation zugewiesen wird. Mittels der wenigstens einen Recheneinheit wird abhängig von den jeweiligen Fertigungskapazitäten eine umzusetzende Verteilungsoption der Vielzahl unterschiedlicher Verteilungsoptionen ausgewählt und entsprechend der umzusetzenden Verteilungsoption automatisch ein Fertigungsplan für einen vorgegebenen Fertigungszeitraum erzeugt. Der Betrieb der Fertigungsanlage gemäß dem Fertigungsplan wird simuliert.

Gemäß zumindest einer Ausführungsform des Simulationsverfahrens wird mittels der wenigstens einen Recheneinheit abhängig von dem Fertigungsplan eine priorisierte Liste von Tätigkeiten für wenigstens einen Bediener der Fertigungsanlage erzeugt.

Die priorisierte Liste wird insbesondere gemäß der oben beschriebenen Schritte erzeugt und für die Simulation verwendet.

Gemäß zumindest einer Ausführungsform des Simulationsverfahrens wird eine simulierte Eingabe des wenigstens einen Bedieners betreffend eine Statusänderungen einer der Tätigkeiten der priorisierten Liste von Tätigkeiten basierend auf einem vorgegebenen Bedienermodell erzeugt und die priorisierte Liste wird von Tätigkeiten abhängig von der simulierten Eingabe aktualisiert, insbesondere mittels des Bedieneranweisungsmoduls.

Gemäß zumindest einer Ausführungsform des Simulationsverfahrens wird mittels der wenigstens einen Recheneinheit ein simulierter Status einer der ersten Fertigungsstationen basierend auf einem vorgegebenen Maschinenmodell erzeugt und die priorisierte Liste von Tätigkeiten wird abhängig von dem simulierten Maschinenstatus aktualisiert.

Weitere Ausführungsformen des erfindungsgemäßen Simulationsverfahrens folgen unmittelbar aus den verschiedenen Ausgestaltungen des erfindungsgemäßen Verfahrens zum Betreiben einer Fertigungsanlage und umgekehrt. Insbesondere lassen sich einzelne Merkmale und entsprechende Erläuterungen sowie Vorteile bezüglich der verschiedenen Ausführungsformen zu dem erfindungsgemäßen Verfahren zum Betreiben einer Fertigungsanlage analog auf entsprechende Ausführungsformen des erfindungsgemäßen Simulationsverfahrens übertragen.

Für Anwendungsfälle oder Anwendungssituationen, die sich bei dem Simulationsverfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Gemäß einem weiteren Aspekt der Erfindung wird ein Datenverarbeitungssystem zum Betreiben einer Fertigungsanlage und/oder zum Simulieren eines Betriebs der Fertigungsanlage angegeben. Die Fertigungsanlage weist eine Vielzahl von ersten Fertigungsstationen auf, die jeweils zur automatischen Durchführung einer Fertigungsaufgabe gemäß einer vordefinierten ersten Aufgabenklasse eingerichtet sind. Jede erste Fertigungsstation ist zumindest durch eine jeweilige räumliche Kapazität und eine jeweilige Fertigungskapazität charakterisiert. Das Datenverarbeitungssystem weist wenigstens eine Recheneinheit auf, die dazu eingerichtet ist, eine Vielzahl von Aufträgen zu erhalten, wobei jeder Auftrag eine Fertigung wenigstens eines zu fertigenden Produkts spezifiziert und wobei die Fertigung jedes zu fertigenden Produkts die Durchführung einer Fertigungsaufgabe gemäß der ersten Aufgabenklasse beinhaltet.

Die wenigstens eine Recheneinheit ist dazu eingerichtet, abhängig von den jeweiligen räumlichen Kapazitäten der Vielzahl von ersten Fertigungsstationen automatisch eine Vielzahl unterschiedlicher Verteilungsoptionen zu bestimmen, wobei durch jede Verteilungsoption jedes zu fertigende Produkt eines Teils der Vielzahl von Aufträgen genau einer ersten Fertigungsstation zugewiesen wird, abhängig von den jeweiligen Fertigungskapazitäten der der Vielzahl von ersten Fertigungsstationen eine umzusetzende Verteilungsoption der Vielzahl unterschiedlicher Verteilungsoptionen auszuwählen und entsprechend der umzusetzenden Verteilungsoption automatisch einen Fertigungsplan für einen vorgegebenen Fertigungszeitraum zu erzeugen.

Basierend auf dem Fertigungsplan kann dann die Fertigungsanlage betrieben werden oder deren Betrieb kann basierend auf dem Fertigungsplan simuliert werden.

Weitere Ausführungsformen des erfindungsgemäßen Datenverarbeitungssystems folgen unmittelbar aus den verschiedenen Ausgestaltungen des erfindungsgemäßen Verfahrens zum Betreiben einer Fertigungsanlage und umgekehrt beziehungsweise des erfindungsgemäßen Simulationsverfahrens und umgekehrt. Insbesondere lassen sich einzelne Merkmale und entsprechende Erläuterungen sowie Vorteile bezüglich der verschiedenen Ausführungsformen zu dem erfindungsgemäßen Verfahren zum Betreiben einer Fertigungsanlage und des erfindungsgemäßen Simulationsverfahrens analog auf entsprechende Ausführungsformen des erfindungsgemäßen Datenverarbeitungssystems übertragen.

Gemäß einem weiteren Aspekt der Erfindung wird eine Fertigungsanlage angegeben, die eine Vielzahl von ersten Fertigungsstationen aufweist, die jeweils zur automatischen Durchführung einer Fertigungsaufgabe gemäß einer ersten Aufgabenklasse eingerichtet sind, sowie ein erfindungsgemäßes Datenverarbeitungssystem.

Gemäß zumindest einer Ausführungsform der erfindungsgemäßen Fertigungsanlage ist die Fertigungsanlage als Fertigungsanlage zur additiven Fertigung ausgestaltet und/oder sind die ersten Fertigungsstationen zur additiven Fertigung von Werkstücken ausgestaltet, insbesondere als 3D-Drucker.

Weitere Ausführungsformen der erfindungsgemäßen Fertigungsanlage folgen unmittelbar aus den verschiedenen Ausgestaltungen des erfindungsgemäßen Verfahrens zum Betreiben einer Fertigungsanlage und umgekehrt beziehungsweise des erfindungsgemäßen Simulationsverfahrens und umgekehrt. Insbesondere lassen sich einzelne Merkmale und entsprechende Erläuterungen sowie Vorteile bezüglich der verschiedenen Ausführungsformen zu dem erfindungsgemäßen Verfahren zum Betreiben einer Fertigungsanlage und des erfindungsgemäßen Simulationsverfahrens analog auf entsprechende Ausführungsformen der erfindungsgemäßen Fertigungsanlage übertragen.

Gemäß einem weiteren Aspekt der Erfindung wird ein Computerprogramm mit Befehlen angegeben. Wenn die Befehle durch ein erfindungsgemäßes Datenverarbeitungssystem ausgeführt werden, veranlassen die Befehle das Datenverarbeitungssystem dazu, die entsprechenden Schritte eines erfindungsgemäßen Verfahrens zum Betreiben einer Fertigungsanlage oder ein erfindungsgemäßes Simulationsverfahren durchzuführen.

Die Befehle können beispielsweise als Programmcode vorliegen. Der Programmcode kann beispielsweise als Binärcode oder Assembler und/oder als Quellcode einer Programmiersprache, zum Beispiel C, und/oder als Programmskript, zum Beispiel Python, bereitgestellt sein.

Gemäß einem weiteren Aspekt der Erfindung wird ein computerlesbares Speichermedium angegeben, welches ein erfindungsgemäßes Computerprogramm speichert.

Ist im Rahmen der vorliegenden Offenbarung die Rede davon, dass eine Komponente der erfindungsgemäßen Fertigungsanlage, insbesondere die wenigstens eine Recheneinheit der Fertigungsanlage dazu eingerichtet, ausgebildet, ausgelegt, oder dergleichen ist, eine bestimmte Funktion auszuführen oder zu realisieren, eine bestimmte Wirkung zu erzielen oder einem bestimmten Zweck zu dienen, so kann dies derart verstanden werden, dass die Komponente, über die prinzipielle oder theoretische Verwendbarkeit oder Eignung der Komponente für diese Funktion, Wirkung oder diesen Zweck hinaus, durch eine entsprechende Anpassung, Programmierung, physische Ausgestaltung und so weiter konkret und tatsächlich dazu in der Lage ist, die Funktion auszuführen oder zu realisieren, die Wirkung zu erzielen oder dem Zweck zu dienen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst sein, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen
- FIG 1: eine schematische Darstellung einer beispielshaften Ausführungsform einer erfindungsgemäßen Fertigungsanlage;
- FIG 2: ein schematisches Ablaufdiagramm einer beispielshaften Ausführungsform eines erfindungsgemäßen Verfahrens zum Betreiben einer Fertigungsanlage; und
- FIG 3: eine schematische Darstellung einer beispielshaften Ausführungsform eines erfindungsgemäßen Datenverarbeitungssystems zum Simulieren eines Betriebs einer Fertigungsanlage.

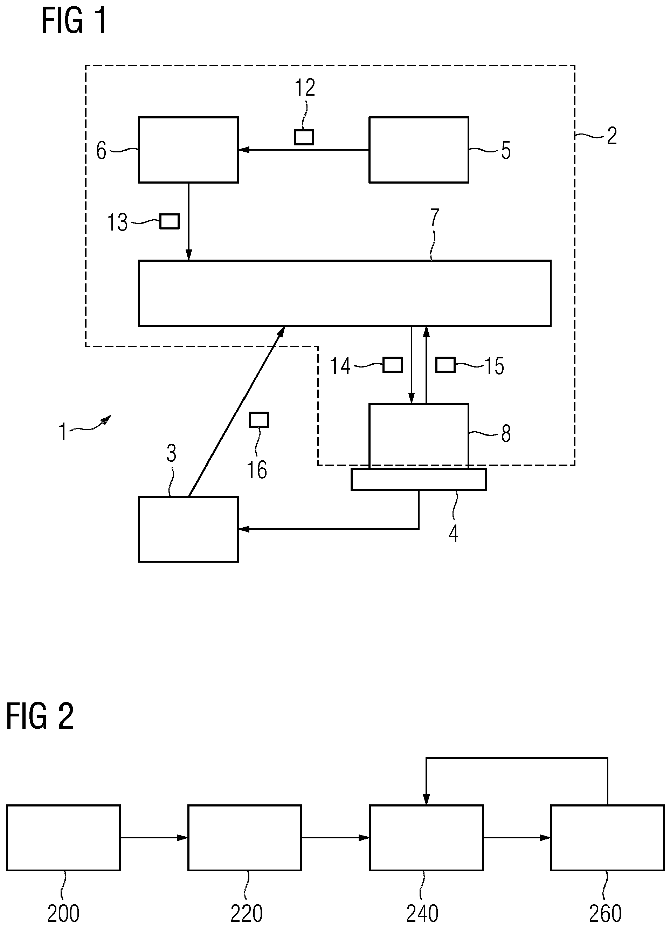

In FIG 1 ist eine schematische Darstellung einer beispielshaften Ausführungsform einer erfindungsgemäßen Fertigungsanlage 1 gezeigt. Die Fertigungsanlage weist eine beispielshafte Ausführungsform eines erfindungsgemäßen Datenverarbeitungssystems 2 zum Betreiben einer Fertigungsanlage auf sowie eine Vielzahl von ersten Fertigungsstationen 3 die jeweils zur automatischen Durchführung einer Fertigungsaufgabe gemäß einer ersten Aufgabenklasse eingerichtet sind. Jede erste Fertigungsstation 3 ist zumindest durch eine jeweilige räumliche Kapazität und eine jeweilige Fertigungskapazität charakterisiert.

Mittels der Fertigungsanlage 1 kann ein erfindungsgemäßes Verfahren zum Betreiben einer Fertigungsanlage durchgeführt werden. Ein Ablaufdiagramm einer beispielhaften Ausführungsform eines solchen Verfahrens ist schematisch in FIG 2 dargestellt.

Beispielsweise ist die Fertigungsanlage 1 zur additiven Fertigung ausgelegt und bei den ersten Fertigungsstationen 3 handelt es sich um 3D-Drucker. Die Fertigungsaufgaben der ersten Aufgabenklasse entsprechen dann beispielsweise einem jeweiligen 3D-Druck eines oder mehrerer Werkstücke. Die räumliche Kapazität entspricht einem Bauraum des jeweiligen 3D-Druckers und die Fertigungskapazität beispielsweise einer Kombination aus Bauraum und Druckgeschwindigkeit. Die Werkstücke entsprechen den zu fertigenden Produkten oder die zu fertigenden Produkte werden aus den gedruckten Werkstücken gefertigt, beispielsweise durch Nachbearbeitung und/oder Nachbehandlung. Die folgenden Erläuterungen lassen sich analog auf andere Anwendungsfälle übertragen.

Zunächst wird in Schritt 200 eine Vielzahl von Aufträgen vorgegeben, wobei jeder Auftrag eine Fertigung wenigstens eines zu fertigenden Produkts spezifiziert und wobei die Fertigung jedes zu fertigenden Produkts die Durchführung einer Fertigungsaufgabe gemäß der ersten Aufgabenklasse und beispielweise die Durchführung wenigstens einer Fertigungsaufgabe gemäß einer zweiten Aufgabenklasse, beispielsweise eine Nachbearbeitung und/oder Nachbehandlung, beinhaltet. Ferner kann eine Kapazität zur Durchführung der Fertigungsaufgaben gemäß der zweiten Aufgabenklasse bestimmt oder vorgegeben werden.

Das Datenverarbeitungssystem 2 enthält wenigstens eine Recheneinheit, die in FIG 1 beispielhaft durch ein Optionsgeneratormodul 5, ein Zeitplanermodul 6 und ein Bedieneranweisungsmodul 7 dargestellt. Dabei kann es sich jeweils um Softwaremodule und/oder Hardwaremodule handeln. Die durch die einzelnen Module durchgeführten Schritte können in alternativen Ausführungsformen auch anderweitig durch die wenigstens eine Recheneinheit durchgeführt werden.

In Schritt 220 des Verfahrens wird mittels des Optionsgeneratormoduls 5 abhängig von den jeweiligen räumlichen Kapazitäten der Vielzahl von ersten Fertigungsstationen 3 automatisch eine Vielzahl unterschiedlicher Verteilungsoptionen 12 bestimmt, wobei durch jede Verteilungsoption jedes zu fertigende Produkt genau eines der jeweiligen Verteilungsoption entsprechenden Teils der Vielzahl von Aufträgen einer der ersten Fertigungsstationen 3 zugewiesen wird.

In Schritt 240 wird mittels des Zeitplanermoduls 6 abhängig von den jeweiligen Fertigungskapazitäten der ersten Fertigungsstationen 3, und gegebenenfalls zusätzlich abhängig von der Kapazität zur Durchführung der Fertigungsaufgaben gemäß der zweiten Aufgabenklasse, eine umzusetzende Verteilungsoption der Vielzahl unterschiedlicher Verteilungsoptionen 12 automatisch ausgewählt und entsprechend der umzusetzenden Verteilungsoption automatisch ein Fertigungsplan 13 zur Abarbeitung der entsprechenden Aufträge innerhalb eines vorgegebenen Fertigungszeitraums, beispielsweise einer Woche, erzeugt. Die Fertigungsanlage 1 wird gemäß dem Fertigungsplan 13 betrieben. Dazu werden insbesondere die der umzusetzenden Verteilungsoption entsprechenden Aufträge basierend auf dem Fertigungsplan 13 abgearbeitet, beispielsweise durch Bediener 4 der Fertigungsanlage 1, auch als Werker bezeichnet.

Beispielsweise wird mittels des Bedieneranweisungsmoduls 7 abhängig von dem Fertigungsplan 13 eine priorisierte Liste 14 von Tätigkeiten für die Bediener 4 erzeugt und beispielsweise mittels wenigstens einem elektronischen Gerät 8 des Datenverarbeitungssystem 2 angezeigt.

In Schritt 260 kann das Bedieneranweisungsmodul 7 beispielsweise eine Eingabe 15 eines Bedieners 4 betreffend eine Statusänderung einer der Tätigkeiten der priorisierten Liste 14 erfassen und/oder von einer der Fertigungsstationen 3 einen Maschinenstatus 16 der ersten Fertigungsstation 3 erhalten. Das Bedieneranweisungsmodul 7 kann die priorisierte Liste 14 abhängig von der Eingabe 15 und/oder dem Maschinenstatus 16 aktualisieren.

In der Fertigungsanlage 1 kann es im Anwendungsfall der additiven Fertigung, insbesondere mit metallischen Werkstoffen, kann es neben den 3D-Druckern als ersten Fertigungsstationen 3 auch Sägen zum Trennen der Druckteile und/oder Öfen zur Wärmebehandlung geben, die bestückt und gestartet werden und dann selbstständig ein vorgegebenes Programm abfahren, bis sie wieder entladen und für den nächsten Job vorbereitet werden. Darüber hinaus kann es auch manuelle Arbeitsplätze, an denen die Bediener 4 die Werkstücke von Hand bearbeiten.

Grundsätzlich können die Bediener 4 in der additiven Fertigung für mehrere Arbeitsplätze und Funktionen eingeplant werden. Manche ihrer Tätigkeiten sind beispielsweise unterbrechbar, andere nicht. Die Ausführungszeiten für eine manuelle Aufgabe können stark schwanken, nicht nur abhängig von Charakteristika der bearbeiteten Produkte, sondern auch vom Erfahrungshintergrund des jeweiligen Bedieners 4. Dazu kommen gegebenenfalls schwer vorhersehbare Probleme im Arbeitsablauf, etwa nicht ausreichende Qualität eines gedruckten Werkstücks oder Fehler in der Nachbearbeitung aufgrund anspruchsvoller Produktgeometrien. Dieses komplexe, nur begrenzt deterministisch vorab bestimmbare Zusammenspiel von Mensch und Maschine kann durch die vorliegende Erfindung so geplant werden, dass sich trotz der genannten Imponderabilien ein effizienter Ablauf ergibt.

Dabei können sich beispielsweise mehrere Herausforderungen stellen. Zum einen kann bei Vorliegen einer größeren Zahl von Aufträgen, die jeweils wiederum die Fertigung mehrerer Produkte erfordern können, eine unüberschaubare Vielfalt an Möglichkeiten zur Aufteilung von Produkten auf 3D-Druckjobs und auf 3D-Drucker vorliegen. Die manuellen Prozesse der additiven Fertigung unterliegen teilweise, wie beschrieben, schwer planbaren Schwankungen, was eine vollständige Ausplanung aller erforderlichen Vorgänge im Detail wenig sinnvoll erscheinen lässt, da die Bediener 4 situationsabhängig in gewissem Rahmen eigene Entscheidungen treffen müssen. Eine Herausforderung besteht somit darin, diese notwendigen Gestaltungsspielräume durch eine automatisierte Planungs- und Steuerungslösung freizuhalten und trotzdem unter Einsatz leistungsfähiger Optimierungsverfahren eine hohe Effizienz des Gesamtprozesses sicherzustellen. Dabei sollten insbesondere die genannten Gestaltungsspielräume so eingegrenzt werden, dass keine für die Produktivität schädlichen Entscheidungen getroffen werden.

Bei dem erfindungsgemäßen Vorgehen kann eine hochgradige Automatisierung erreicht werden, bei der unterschiedliche Systeme, insbesondere das Optionsgeneratormodul 5, das Zeitplanermodul 6 und das Bedieneranweisungsmodul 7, kombiniert werden, um die Effizienz der Fertigungsanlage 1 zu optimieren.

Dabei können zur Erstellung des Fertigungsplans 13 einerseits exakte automatische Optimierungsverfahren eingesetzt werden, um die Planung kritischer Ressourcen, insbesondere 3D-Drucker und Bediener 4 für deren Vorbereitung, unter verschiedenen Optimierungskriterien, beispielsweise Durchsatz, Produktivität, Termineinhaltung für Aufträge mit Lieferdatum, Kosten und so weiter innerhalb eines bestimmten Planungshorizonts, der durch den Fertigungszeitraum gegeben ist, bestmöglich zu gestalten. Die langlaufenden 3D-Druckvorgänge selbst bedürfen im Regelfall keiner menschlichen Betreuung, sondern können ohne Pause durchlaufen, so dass der Betrieb der 3D-Drucker im Rahmen einer optimierten Planung zur Optimierung der Produktivität bewusst auch außerhalb von Arbeitsschichten gelegt werden kann. In manchen Ausführungsformen kann dies auch für Öfen oder sonstige Maschinen so gehandhabt werden.

Andererseits gibt es eine Reihe von Vorgängen zur Nachbearbeitung der Produkte, die nicht oder nur teilweise automatisiert sind, die je nach aktueller Situation beispielsweise flexibel gestartet und unterbrochen werden können. Eine exakte Optimierung der Planung ist diesbezüglich aufgrund starker Schwankungen in den Bearbeitungszeiten und/oder wegen unterschiedlichen Erfahrungsständen der Bediener 4 und vielfältigen Unterschieden in der Produktgeometrie für diese Vorgänge gegebenenfalls nicht sinnvoll. Dies gilt besonders für das Entfernen von Stützstrukturen bei den gedruckten Werkstücken, insbesondere wenn vorwiegend Kleinserien und/oder Einzelstücke gefertigt werden. Jedoch können sie auf der Basis ganzer Schichten oder Tage so eingeplant werden, dass die benötigte Bearbeitungskapazität durch die Bediener 4 gesichert ist. Schwankungen in der Bearbeitungszeit einzelner Vorgänge mitteln sich bei dieser gröberen kapazitiven Planung zu einem erheblichen Teil heraus.

Die Planung erfolgt logisch in zwei aufeinanderfolgenden Schritten. Da die zu druckenden Produkte aus Effizienzgründen beispielsweise nicht einzeln gedruckt werden, sondern mehrere Produkte des gleichen Materials gemeinsam in einem Druckjob produziert werden, werden zunächst die Verteilungsoptionen 12, auch als Druckjoboptionen bezeichnet, generiert, die einerseits den zur Verfügung stehenden Bauraum der 3D-Drucker effizient ausnutzen und zum anderen im Hinblick auf die nachfolgende Zeitplanung bestmögliche Voraussetzungen schaffen, um die zur Verfügung stehenden Ressourcen über die Zeit optimal nutzen zu können. Diese Optionsberechnung kann beispielsweise als ein komplexes kombinatorisches Optimierungsproblem behandelt werden, das insbesondere anhand eines mathematischen Optimierungsmodells, beispielsweise einem gemischt ganzzahligen linearen Optimierungsverfahren, gelöst werden kann.

Sodann wird aus der Vielzahl von Verteilungsoptionen 12 eine umzusetzende Verteilungsoption, also insbesondere eine geeignete Menge von tatsächlich zu druckenden Druckjobs, ermittelt, zeitlich terminiert und kapazitiv mit den über die Zeit zur Verfügung stehenden Ressourcen abgeglichen. Auch dieser Schritt entspricht wiederum einem komplexen kombinatorischen Optimierungsproblem, welches beispielsweise ebenfalls mit Hilfe der gemischt ganzzahligen linearen Optimierung gelöst werden kann. Dabei werden wie oben beschrieben auch die dem Druckvorgang und die gegebenenfalls der nachträglichen Wärmebehandlung nachfolgenden manuellen Prozesse kapazitiv berücksichtigt.

Das Bedieneranweisungsmodul 7 kann auf den ihm automatisch übermittelten Fertigungsplan 13 aufsetzen, der einerseits exakt terminierte Vorgänge, vor allem die 3D-Drucke und deren Vor- und/oder Nachbereitung, enthält, und andererseits eine schichtbezogene Grobplanung der unterbrechbaren Nachbearbeitungsvorgänge enthält. Das Bedieneranweisungsmodul 7 kann für letztere Vorgänge einerseits die Einhaltung von Randbedingungen bezüglich der Reihenfolge von Operationen und deren frühesten Beginn sicherstellen, aber andererseits den Bedienern 4 entsprechende Freiheiten lassen, die notwendig sind, um situationsadäquat agieren zu können, zum Beispiel, um bei mehreren startbaren Nachbearbeitungsaktivitäten diejenigen auszuwählen, die für den Erfahrungshintergrund des aktuell eingesetzten Bedieners 4 am effizientesten zu bearbeiten sind, oder die unnötige Rüstvorgänge vermeiden.

Das Bedieneranweisungsmodul 7 kann beispielsweise Empfehlungen bezüglich der Priorisierung von Aktivitäten etwa nach spätestem Fertigstellungsdatum des zugehörigen Auftrags ausgeben. Darüber hinaus kann es beispielsweise Vorgänge in kleinere Schritte unterteilen, die für die optimierte Planung gegebenenfalls nicht von Bedeutung sind, aber dem Bediener 4 wertvolle Führung liefern können. So könnte eine Aufgabe "Vorbereitung des Arbeitsplatzes" beispielsweise in die Teilaufgaben "Reinigung des Systems", "Überprüfung der Maschinen", "Rekonfiguration des Systems" und "Beladen des Systems" aufgeteilt werden. Diese Aufgaben und/oder Teilaufgaben können dann den Bedienern 4 und insbesondere dem entsprechend zugeordneten Bediener 4 über die elektronischen Geräte 8, beispielsweise mobile Endgeräte, angezeigt werden. Der Bediener 4 dann den Beginn und das Ende der Tätigkeit auf dem elektronischen Gerät 8 beispielsweise quittieren, damit die Aufgaben nur einmal verteilt werden, aber auch damit der Bediener 4 nach Abschluss der Tätigkeit mit neuen Aufgaben versorgt werden kann. Abgeschlossene Tätigkeiten können von den automatisierten ersten Fertigungsstationen 3 und/oder dem Bediener 4 an das Bedieneranweisungsmodul 7 zurückgemeldet werden.

Außerdem kann das Bedieneranweisungsmodul 7, zum Beispiel über eine standardisierte Softwareschnittstelle mit den ersten Fertigungsstationen 3 verbunden sein, so dass die ersten Fertigungsstationen 3 in Form des Maschinenstatus 16 auch Informationen über ihren Zustand an das Bedieneranweisungsmodul 7 weiterleiten können. Dies kann zum einen Fehlerfälle betreffen, so dass die Bediener 4 über Fehler informiert werden können, deren Fehlerbehandlung gegebenenfalls ebenfalls hinterlegt ist, aber auch aktuelle Zustände wie Fortschrittszeiten oder Fertigstellung übertragen, damit die Bediener 4 wie auch das Bedieneranweisungsmodul 7 einplanen können, wann gewisse Tätigkeiten anstehen und vorgesehen werden müssen oder können. Das Bedieneranweisungsmodul 7 kann darüber hinaus beispielsweise die Zeiten manueller Schritte erfassen und auf Basis von historischen und/oder produktspezifischen Daten im Laufe der Zeit verbesserte Schätzungen für die Bearbeitungsdauer berücksichtigen, etwa durch den Einsatz von Methoden zum maschinellen Lernen.

Ein wesentlicher erzielbarer Vorteil kann in dem neuartigen Umgang mit der Kombination effizienzkritischer und auch der exakten Optimierung zugänglicher Vorgänge und nicht exakt planbarer, insbesondere manueller, Tätigkeiten, wie sie charakteristisch ist unter anderem für die additive Fertigung, gesehen werden. Dabei können Methoden der exakten Optimierung kombiniert werden mit einer intelligenten Heuristik des Bedieneranweisungsmoduls 7. Durch diese aufeinander abgestimmte Kombination können einerseits Optimierungspotenziale ausgeschöpft werden, die bei einer komplexen Auftragsmischung von menschlichen Planern nicht realisiert werden könnten. Andererseits kann den Bedienern 4 die Freiheit überlassen werden, den im Detail nicht vollständig exakt planbaren Ablauf in der Nachbearbeitung optimal im Rahmen der gegebenen Randbedingungen und unter Berücksichtigung wichtiger Kriterien wie Auftragspriorität zu gestalten.

Im Ergebnis führt das zu höherer Produktivität, besserer Termineinhaltung und optimierter Ressourcenauslastung. Dabei kann Transparenz bezüglich des Fertigungsplans und dessen vorausgesagter und/oder tatsächlicher Einhaltung gewährleistet werden. Die Vorteile wirken sich insbesondere aus in Fertigungsanlagen 1 mit einer Mischung von manuellen, teilautomatisierten und vollautomatisierten Fertigungsressourcen.

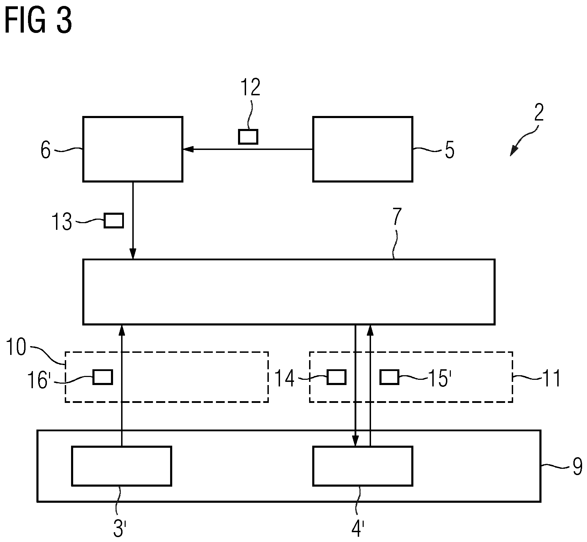

FIG 3 zeigt ein schematisches Blockdiagramm für eine beispielhafte Ausführungsform eines erfindungsgemäßen Datenverarbeitungssystems 2 zum Simulieren eines Betriebs der Fertigungsanlage 1. Dazu führt das Datenverarbeitungssystem 2 insbesondere ein erfindungsgemäßes Verfahren zum Simulieren des Betriebs der Fertigungsanlage 1 durch. Das Datenverarbeitungssystem 2 basiert beispielsweise auf dem bezüglich FIG 1 diskutierten Datenverarbeitungssystem 2, weist also beispielsweise das Optionsgeneratormodul 5, das Zeitplanermodul 6 und das Bedieneranweisungsmodul 7 mit den beschriebenen Funktionen auf.

Die Abarbeitung der entsprechenden Aufträge kann basierend auf dem Fertigungsplan 13 simuliert werden, beispielsweise unter Verwendung eines Simulatormoduls 9 der wenigstens einen Recheneinheit, welches beispielsweise ein Maschinenmodell 3' betreffend die ersten Fertigungsstationen 3 und ein Bedienermodell 4' betreffend die Bediener 4 enthält. Das Bedieneranweisungsmodul 7 kann von dem Bedienermodell 4' beispielsweise über eine Bedienerschnittstelle 11 eine simulierte Eingabe 15' eines Bedieners 4 betreffend eine Statusänderungen einer der Tätigkeiten der priorisierten Liste 14 erfassen. Alternativ oder zusätzlich kann das Bedieneranweisungsmodul 7 von dem Maschinenmodell 3' beispielsweise über eine Maschinenschnittstelle 10 einen simulierten Maschinenstatus 16' erfassen.

Das Simulatormodul 9 kann als virtueller oder digitaler Zwilling der Fertigungsanlage 1 aufgefasst werden, der eingesetzt werden kann, um den wie beschrieben erzeugten Fertigungsplan 13 zu bewerten und/oder vor seiner Umsetzung virtuell in Betrieb zu nehmen.

Das Simulatormodul 9 bildet sowohl den Materialfluss in der Fertigungsanlage 1 ab, insbesondere durch das Maschinenmodell 3', also auch das Verhalten der Bediener 4, insbesondere durch das Bedienermodell 4'. Im Gegensatz zu einer klassischen virtuellen Inbetriebnahme erfolgt die Kommunikation zwischen dem Simulatormodul 9, insbesondere dem Bedienermodell 4' und dem Bedieneranweisungsmodul 7 beispielsweise nicht über standardisierte Automatisierungsprotokolle, sondern über die priorisierte Liste 14 von Tätigkeiten für die Bediener 4. Ferner kann das Modell so aufgesetzt werden, dass nicht der Materialfluss des Produktes die Produktionsabläufe steuert, sondern die Steuerung der Werker diese voranbringt.

Da für das Aussteuern der Bediener beispielsweise keine automatisierte Schnittstelle gegeben ist, weil diese ihre Anweisungen über HMIs der elektronischen Geräte 8 erhalten und auch über die elektronischen Geräte 8 quittieren können, kann über die Schnittstelle 11 eine parallele Kommunikation zwischen dem Bedieneranweisungsmodul 7 und dem Simulatormodul 9 eingerichtet werden. Dies kann zum Beispiel über ein Netzwerkprotokoll zur Maschine-zu-Maschine-Kommunikation, beispielsweise MQTT, oder eine sonstige standardisierte Softwareschnittstelle, etwa OPC, erfolgen. Über die Schnittstelle 11 können die priorisierte Liste 14 von Tätigkeiten für die Bediener 4 an das Simulatormodul 9 übertragen und die simulierten Statusänderungen 15' von dem Simulatormodul 9 an das Bedieneranweisungsmodul 7 zurückgemeldet werden.

Das Maschinenmodell 3', das beispielsweise eines oder mehrere Produkte gemäß ihren Produktionsschritten durch die Fertigungsanlage 1 routen kann, wird insbesondere um das Bedienermodell 4' erweitert, wobei die einzelnen Handlungssequenzen durch das Bedieneranweisungsmodul 7 ausgelöst werden können, und deren Start, Ende, und so weiter durch entsprechende Signale quittiert werden können.

Die Anweisungen aus der priorisierten Liste 14 können im Simulatormodul 9 wiederum durch Teilsequenzen abgebildet werden, um unter anderem beispielsweise Wegezeiten der Bediener 4 berücksichtigen zu können. Zum Beispiel kann eine Anweisung "Bestücke Maschine" abgebildet werden durch die Teilsequenzen "Gehe ins Lager", "Nehme ein Werkstück", "Gehe zur Maschine" und "Bestücke Maschine". Ferner können die Bediener 4, ihre Qualifikationen und/oder die Schichtsysteme ebenfalls abgebildet werden.

Da die Prozesszeiten spezifisch für die jeweiligen Aufträge, Produkte und/oder ersten Fertigungsstationen 3 sein können, können diese durch das Bedieneranweisungsmodul 7 aus dem Fertigungsplan 13 abgeleitet und zusammen mit dem Auftrag an das Simulatormodul 9 übertragen werden. Im Simulatormodul 9 können Schwankungswerte der Bearbeitungszeiten von Bedienern 4 und Fertigungsstationen hinterlegt sein, so dass die Zeiten der Simulation stochastisch gestört werden können, um Abweichungen von Vorgaben zu simulieren und gegebenenfalls entsprechende Umplanungen zu veranlassen. Diese stochastischen Modelle können sich nach der Qualifikation der Bediener 4 unterscheiden beziehungsweise können auch typisches menschliches Verhalten simulieren, wie etwa eine erhöhte Fehlerrate bei monotonen Tätigkeiten, Müdigkeit nach einer Mittagspause, Stress vor Ende der Schicht und so weiter.

Die Simulation kann einerseits zur virtuellen Inbetriebnahme der Fertigungsanlage 1 dienen und zu ihrer Steuerung zur Reduktion von Aufwänden zur Fehlerbehebung. Andererseits erlaubt die Simulation den Vergleich abgewandelter Versionen der Modelle mit Hinblick auf die Ergebnisqualität des damit erzielten Produktionsablaufs. Es kann auch geprüft werden, ob ein berechneter Plan innerhalb der geplanten Zeit unter realistischen Bedingungen erfüllt werden kann. Wird beispielsweise feststellt, dass der Fertigungsplan 13 unrealistisch ist, können beispielsweise Pufferzeiten und/oder Zeitvorgaben angepasst oder anders bewertet werden und dann eine Umplanung eingeleitet werden, beispielsweise manuell.

Das Bedienermodell 4' kann auch verschiedene Entscheidungsstrategien berücksichtigen, nach denen Bediener 4 ihre Auswahl von Arbeitsschritten treffen können, beispielsweise nach Priorität, gemäß dem First In - First Out Prinzip, bevorzugen von wiederholten Tätigkeiten, Zufall oder auch Kombinationen davon.

Auch können beispielsweise unter Berücksichtigung der mittleren Betriebsdauer zwischen Ausfällen, MTBF (englisch: mean time between failures) Ausfälle der ersten Fertigungsstationen 3 simuliert werden. Ebenso kann man auch eine gewisse Ausschussrate, welche aus empirischen Daten gewonnen werden kann, berücksichtigt werden. Diese Fehler können vom Bedienermodell 4' an das Bedieneranweisungsmodul 7 gemeldet werden und/oder von dem Maschinenmodell 3', je nachdem ob die ersten Fertigungsstationen 3 in der realen Fertigungsanlage 1 eine entsprechende Verbindung zum Bedieneranweisungsmodul 7 haben, sodass das Bedieneranweisungsmodul 7 eine Umplanung vorsehen kann, beziehungsweise Bediener 4, die eine Qualifikation für Wartungstätigkeiten haben, abziehen kann, um Reparaturen durchzuführen.

Mit diesem Verfahren kann nun bewertet werden, ob ein Fertigungsplan prinzipiell erfüllbar ist, und/oder, es kann beispielsweise mittels Monte Carlo Simulationen analysiert werden, inwieweit Zeitfenster für Bediener 4 und erste Fertigungsstationen 3 eingehalten werden können, und wie viele der geplanten Tätigkeiten voraussichtlich abgearbeitet werden können, sobald zufällige Abweichungen auftreten, und so weiter. Diese Informationen können dann in den Planungsprozess zurückgespielt werden.

Durch entsprechende Ausführungsformen des erfindungsgemäßen Simulationsmodells kann die Simulation nicht mehr nur produkt- und maschinenorientiert stattfinden, sondern an den Bedienern 4 orientiert. So kann also ein bedieneroptimiertes Simulationsmodel anstelle eines produkt- und maschinenorientierten Simulationsmodells realisiert werden.

Unabhängig vom grammatikalischen Geschlecht eines bestimmten Begriffes, insbesondere des Begriffs "Bediener", sind Personen mit männlicher, weiblicher oder anderer Geschlechteridentität mit umfasst.

## Patentansprüche

1. Verfahren zum Betreiben einer Fertigungsanlage (1), die Fertigungsanlage (1) aufweisend eine Vielzahl von ersten Fertigungsstationen (3), die jeweils zur automatischen Durchführung einer Fertigungsaufgabe gemäß einer vordefinierten ersten Aufgabenklasse eingerichtet sind, wobei jede erste Fertigungsstation (3) zumindest durch eine jeweilige räumliche Kapazität und eine jeweilige Fertigungskapazität charakterisiert ist und wobei
- eine Vielzahl von Aufträgen vorgegeben wird, wobei jeder Auftrag eine Fertigung wenigstens eines zu fertigenden Produkts spezifiziert und wobei die Fertigung jedes zu fertigenden Produkts die Durchführung einer Fertigungsaufgabe gemäß der ersten Aufgabenklasse beinhaltet;
- mittels wenigstens einer Recheneinheit abhängig von den jeweiligen räumlichen Kapazitäten der Vielzahl von ersten Fertigungsstationen (3) automatisch eine Vielzahl unterschiedlicher Verteilungsoptionen (12) bestimmt wird, wobei durch jede Verteilungsoption jedes zu fertigende Produkt eines Teils der Vielzahl von Aufträgen einer ersten Fertigungsstation (3) zugewiesen wird;
- mittels der wenigstens einen Recheneinheit abhängig von den jeweiligen Fertigungskapazitäten der Vielzahl von ersten Fertigungsstationen (3) eine umzusetzende Verteilungsoption der Vielzahl unterschiedlicher Verteilungsoptionen (12) automatisch ausgewählt wird und entsprechend der umzusetzenden Verteilungsoption automatisch ein Fertigungsplan (13) für einen vorgegebenen Fertigungszeitraum erzeugt wird; und
- die Fertigungsanlage (1) gemäß dem Fertigungsplan (13) betrieben wird.

2. Verfahren nach Anspruch 1, wobei die Fertigungsanlage (1) als Fertigungsanlage (1) zur additiven Fertigung ausgestaltet ist.

3. Verfahren nach einem der vorhergehenden Ansprüche, wobei mittels der wenigstens einen Recheneinheit abhängig von dem Fertigungsplan (13) eine priorisierte Liste (14) von Tätigkeiten für wenigstens einen Bediener (4) der Fertigungsanlage (1) erzeugt wird.

4. Verfahren nach Anspruch 3, wobei
- eine Eingabe (15) des wenigstens einen Bedieners (4) betreffend eine Statusänderung einer der Tätigkeiten der priorisierten Liste (14) von Tätigkeiten erfasst wird; und
- die priorisierte Liste (14) von Tätigkeiten abhängig von der Eingabe (15) aktualisiert wird.

5. Verfahren nach einem der Ansprüche 3 oder 4, wobei
- mittels der wenigstens einen Recheneinheit ein Maschinenstatus (16) von einer der ersten Fertigungsstationen (3) erhalten wird; und
- die priorisierte Liste (14) von Tätigkeiten abhängig von dem Maschinenstatus (16) aktualisiert wird.

6. Verfahren nach einem der vorhergehenden Ansprüche, wobei die Vielzahl unterschiedlicher Verteilungsoptionen (12) einer echten Teilmenge einer Grundmenge aller mittels der Vielzahl von ersten Fertigungsstationen (3) realisierbarer Verteilungsoptionen (12) ist und zum Bestimmen der Vielzahl unterschiedlicher Verteilungsoptionen (12)
- ein Optimierungsverfahren durchgeführt wird, wobei die Vielzahl realisierbarer Verteilungsoptionen der Grundmenge als Variablen bei dem Optimierungsverfahren verwendet werden; oder
- eine Vorauswahl aus der Grundmenge unter Anwendung wenigstens eines vorgegebenen Auswahlkriteriums durchgeführt wird.

7. Verfahren nach einem der vorhergehenden Ansprüche, wobei zum Auswählen der umzusetzenden Verteilungsoption ein weiteres Optimierungsverfahren durchgeführt wird, wobei die Vielzahl unterschiedlicher Verteilungsoptionen (12) als Variablen bei dem weiteren Optimierungsverfahren verwendet werden.

8. Verfahren nach einem der Ansprüche 6 oder 7, wobei das Optimierungsverfahren als Verfahren zur gemischt ganzzahligen linearen Optimierung durchgeführt wird und/oder das weitere Optimierungsverfahren als Verfahren zur gemischt ganzzahligen linearen Optimierung durchgeführt wird.

9. Verfahren nach einem der vorhergehenden Ansprüche, wobei die Fertigung jedes zu fertigenden Produkts die Durchführung einer Fertigungsaufgabe gemäß einer vordefinierten zweiten Aufgabenklasse beinhaltet, und
- die umzusetzende Verteilungsoption abhängig von einer Kapazität zur Durchführung der Fertigungsaufgaben gemäß der zweiten Aufgabenklasse bestimmt wird; und/oder
- die wenigstens eine Fertigungsaufgabe gemäß der zweiten Aufgabenklasse eine Nachbehandlung oder Nachbearbeitung mittels einer zweiten Fertigungsstation (3) der Fertigungsanlage (1) und/oder eine manuelle Nachbehandlung oder Nachbearbeitung beinhaltet.

10. Verfahren nach einem der vorhergehenden Ansprüche, wobei wenigstens ein Teil der Vielzahl von ersten Fertigungsstationen (3) jeweils dazu eingerichtet ist, die entsprechende Fertigungsaufgabe gemäß der ersten Aufgabenklasse gleichzeitig für eine Vielzahl von Produkten durchzuführen.

11. Verfahren zum Simulieren eines Betriebs einer Fertigungsanlage (1), die Fertigungsanlage (1) aufweisend eine Vielzahl von ersten Fertigungsstationen (3), die jeweils zur automatischen Durchführung einer Fertigungsaufgabe gemäß einer vordefinierten ersten Aufgabenklasse eingerichtet sind, wobei jede erste Fertigungsstation (3) zumindest durch eine jeweilige räumliche Kapazität und eine jeweilige Fertigungskapazität charakterisiert ist und wobei
- eine Vielzahl von Aufträgen vorgegeben wird, wobei jeder Auftrag eine Fertigung wenigstens eines zu fertigenden Produkts spezifiziert und wobei die Fertigung jedes zu fertigenden Produkts die Durchführung einer Fertigungsaufgabe gemäß der ersten Aufgabenklasse beinhaltet;
- mittels wenigstens einer Recheneinheit abhängig von den jeweiligen räumlichen Kapazitäten der Vielzahl von ersten Fertigungsstationen (3) automatisch eine Vielzahl unterschiedlicher Verteilungsoptionen (12) bestimmt wird, wobei durch jede Verteilungsoption jedes zu fertigende Produkt eines Teils der Vielzahl von Aufträgen einer ersten Fertigungsstation (3) zugewiesen wird;
- mittels der wenigstens einen Recheneinheit abhängig von den jeweiligen Fertigungskapazitäten der Vielzahl von ersten Fertigungsstationen (3) eine umzusetzende Verteilungsoption der Vielzahl unterschiedlicher Verteilungsoptionen (12) ausgewählt wird und entsprechend der umzusetzenden Verteilungsoption automatisch ein Fertigungsplan (13) für einen vorgegebenen Fertigungszeitraum erzeugt wird; und
- der Betrieb der Fertigungsanlage (1) gemäß dem Fertigungsplan (13) simuliert wird.

12. Verfahren nach Anspruch 11, wobei mittels der wenigstens einen Recheneinheit abhängig von dem Fertigungsplan (13) eine priorisierte Liste (14) von Tätigkeiten für wenigstens einen Bediener (4) der Fertigungsanlage (1) erzeugt wird,
- eine simulierte Eingabe (15') des wenigstens einen Bedieners (4) betreffend eine Statusänderung einer der Tätigkeiten der priorisierten Liste (14) von Tätigkeiten basierend auf einem vorgegebenen Bedienermodell (4') erzeugt wird und die priorisierte Liste (14) von Tätigkeiten abhängig von der simulierten Eingabe (15') aktualisiert wird; und/oder
- mittels der wenigstens einen Recheneinheit ein simulierter Maschinenstatus (16') einer der ersten Fertigungsstationen (3) basierend auf einem vorgegebenen Maschinenmodell (3') erzeugt wird und die priorisierte Liste (14) von Tätigkeiten abhängig von dem simulierten Maschinenstatus (16') aktualisiert wird.

13. Datenverarbeitungssystem (2) zum Betreiben einer Fertigungsanlage (1) und/oder zum Simulieren eines Betriebs der Fertigungsanlage (1), die Fertigungsanlage (1) aufweisend eine Vielzahl von ersten Fertigungsstationen (3), die jeweils zur automatischen Durchführung einer Fertigungsaufgabe gemäß einer vordefinierten ersten Aufgabenklasse eingerichtet sind, wobei jede erste Fertigungsstation (3) zumindest durch eine jeweilige räumliche Kapazität und eine jeweilige Fertigungskapazität charakterisiert ist, und wobei das Datenverarbeitungssystem (2) wenigstens eine Recheneinheit aufweist, die dazu eingerichtet ist,
- eine Vielzahl von Aufträgen zu erhalten, wobei jeder Auftrag eine Fertigung wenigstens eines zu fertigenden Produkts spezifiziert und wobei die Fertigung jedes zu fertigenden Produkts die Durchführung einer Fertigungsaufgabe gemäß der ersten Aufgabenklasse beinhaltet;
- abhängig von den jeweiligen räumlichen Kapazitäten der Vielzahl von ersten Fertigungsstationen (3) automatisch eine Vielzahl unterschiedlicher Verteilungsoptionen (12) zu bestimmen, wobei durch jede Verteilungsoption jedes zu fertigende Produkt eines Teils der Vielzahl von Aufträgen einer ersten Fertigungsstation (3) zugewiesen wird;
- abhängig von den jeweiligen Fertigungskapazitäten der Vielzahl von ersten Fertigungsstationen (3) eine umzusetzende Verteilungsoption der Vielzahl unterschiedlicher Verteilungsoptionen (12) auszuwählen und entsprechend der umzusetzenden Verteilungsoption automatisch einen Fertigungsplan (13) für einen vorgegebenen Fertigungszeitraum zu erzeugen.

14. Fertigungsanlage (1) aufweisend eine Vielzahl von ersten Fertigungsstationen (3), die jeweils zur automatischen Durchführung einer Fertigungsaufgabe gemäß einer ersten Aufgabenklasse eingerichtet sind, sowie ein Datenverarbeitungssystem (2) nach Anspruch 13.

15. Fertigungsanlage (1) nach Anspruch 14, wobei die Fertigungsanlage (1) als Fertigungsanlage (1) zur additiven Fertigung ausgestaltet ist und/oder wobei die ersten Fertigungsstationen (3) zur additiven Fertigung von Werkstücken ausgestaltet sind.
